# EUROPEAN PATENT APPLICATION

(11) **EP 4 568 099 A1**
(43) Date of publication of application: **11.06.2025**
(21) Application number: 24215361.7
(22) Date of filing: 26.11.2024
(51) Int. Cl.: H02P 3/00, F01L 1/34

(54) **MOTOR CONTROL DEVICE**

(30) Priority: 04.12.2023 JP 2023204493
(71) Applicant: Aisin Corporation, Aichi 448-8650 (JP)
(72) Inventor: KASUYA, Yuki, Kariya, 448-8650 (JP); KIRA, Naoki, Kariya, 448-8650 (JP)
(74) Representative: Winter, Brandl - Partnerschaft mbB

(57) **Abstract**

A motor control device (1) that controls a motor M that drives an electric device, the motor control device (1) includes a target current information acquisition unit (10) that acquires target current information indicating a target current value of a current for energizing the motor M, an actual current information acquisition unit (11) that acquires actual current information indicating an actual current value of a current actually flowing through the motor M, and a voltage value setting unit (13) that sets a voltage value of a voltage to be applied to the motor M, wherein the voltage value setting unit (13) lowers the voltage value when the actual current value exceeds the target current value, and increases the voltage value when the actual current value falls below the target current value.

## Description

### TECHNICAL FIELD

The present disclosure relates to a motor control device that controls a motor that drives an electric device.

### BACKGROUND DISCUSSION

In the related art, a motor is used to drive an electric device. The electric device driven by such a motor includes, for example, a valve opening and closing timing control device that controls the opening and closing timing of at least one of the intake valve and the exhaust valve of an internal combustion engine. As a technique related to an electric valve opening and closing timing control device, for example, there is a technique described in JP 2013-83155 A, the source of which is described below.

JP 2013-83155 A describes a control system for variable valve timing in an internal combustion engine. In this control system, based on a detection result of a cam angle sensor that detects an angle of an intake cam and/or an exhaust cam provided in an engine, only electric power necessary for operation is supplied to a variable valve timing mechanism within a range of a cam angle at which a cam torque is negative.

In order to change performance of an internal combustion engine including a plurality of cylinders, an opening and closing timing of at least one of an intake valve and an exhaust valve of the internal combustion engine is changed. Power or current is required to secure a conversion speed required at the time. In order to reduce such power or current, for example, it is conceivable to perform control such that the motor is energized at the timing when the cam torque is negative (before passing over the cam peak) and the energization is stopped at the timing when the cam torque is positive (after passing over the cam peak). However, such control is not sufficient for reducing power consumption or current consumption.

In addition, general control of the electric valve opening and closing timing control device includes constant conversion speed control for making the conversion speed constant and constant voltage control for making the applied voltage constant. In the constant conversion speed control, the voltage or the power is increased when the conversion speed is low, and the voltage or the power is decreased when the conversion speed is high. When the control system described in JP 2013-83155 A controls the variable valve timing mechanism by the constant conversion speed control, current consumption increases when the voltage or the power is increased. When the control system described in JP 2013-83155 A controls the variable valve timing mechanism by the constant voltage control, a consumption current flows to some extent. Therefore, the control system described in JP 2013-83155 A has room for improvement in reducing power consumption.

A need thus exists for a control device that can reduce power consumption.

### SUMMARY

A characteristic configuration of a motor control device according to the present disclosure is a motor control device that controls a motor that drives an electric device, the motor control device includes a target current information acquisition unit that acquires target current information indicating a target current value of a current for energizing the motor, an actual current information acquisition unit that acquires actual current information indicating an actual current value of a current actually flowing through the motor, and a voltage value setting unit that sets a voltage value of a voltage to be applied to the motor, wherein the voltage value setting unit decreases the voltage value when the actual current value exceeds the target current value, and increases the voltage value when the actual current value falls below the target current value.

With such a characteristic configuration, when the load of the motor is high and the actual current exceeds the target current value, the voltage value of the applied voltage applied to the motor is decreased to lower the output of the motor, and when the load of the motor is low and the actual current falls below the target current value, the voltage value of the applied voltage applied to the motor is increased to raise the output of the motor. As a result, it is possible to reduce power consumption when the load of the motor increases, and it is possible to suppress a decrease in the number of rotations of the motor when the load of the motor decreases.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view of a valve opening and closing timing control device;
Fig. 2 is a sectional view taken along line II-II of Fig. 1;
Fig. 3 is an exploded perspective view of the valve opening and closing timing control device;
Fig. 4 is a block diagram illustrating a configuration of a motor control device;
Fig. 5 is a characteristic diagram of a motor; and
Fig. 6 is a diagram illustrating control by the motor control device.

### DETAILED DESCRIPTION

The motor control device controls a motor that drives an electric device. The electric device is a device operated by electric energy, and is driven by a motor in the present disclosure. In the present embodiment, an electric valve opening and closing timing control device will be described as an example of the electric device. Therefore, the motor control device controls a motor that drives the electric valve opening and closing timing control device. Hereinafter, a motor control device 1 according to the present embodiment will be described. However, the motor control device 1 is not limited to the following embodiment, and various modifications can be made without departing from the gist of the motor control device 1.

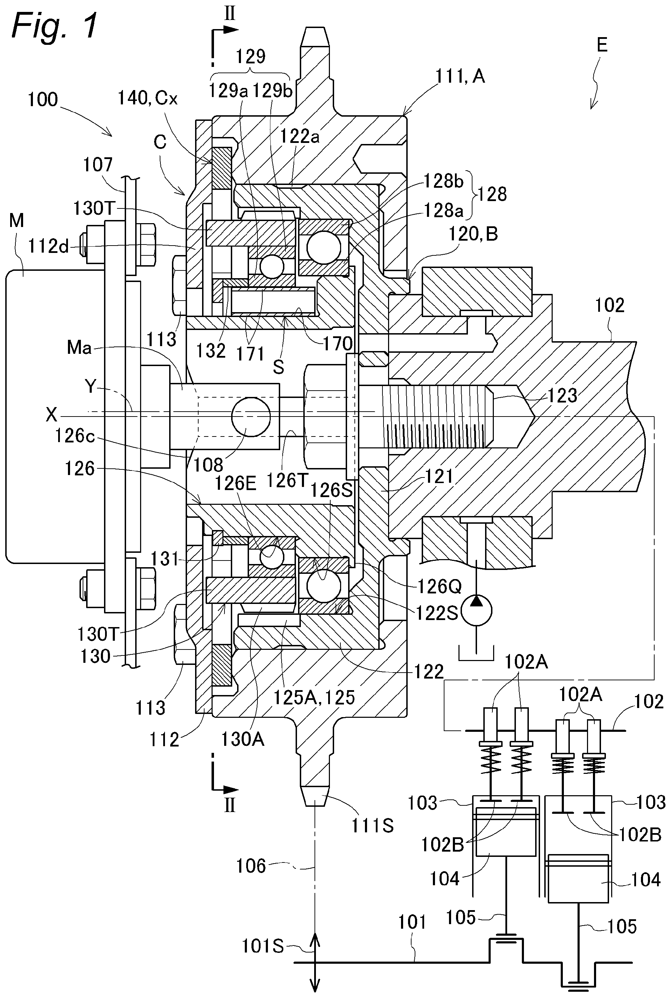

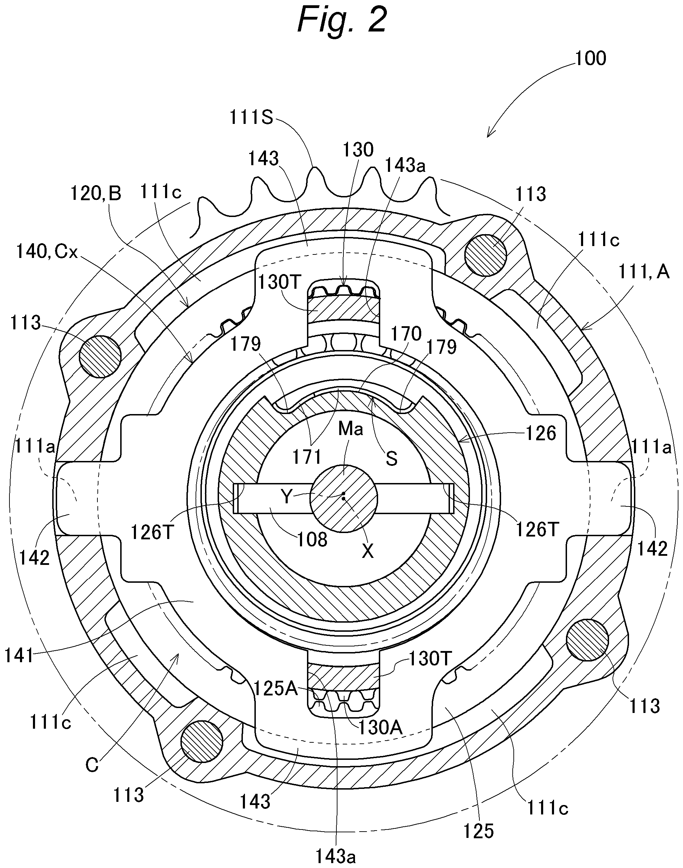

As described above, the motor control device 1 controls a phase control motor (an example of the "motor") M that drives an electric valve opening and closing timing control device 100. Fig. 1 is a cross-sectional view of the valve opening and closing timing control device 100. Fig. 2 is a sectional view taken along line II-II of Fig. 1.

As illustrated in Fig. 1, the valve opening and closing timing control device 100 includes a drive-side rotating body A, a driven-side rotating body B, and a phase adjustment mechanism C. The drive-side rotating body A rotates about the rotation axis X in synchronization with a crankshaft 101 of an engine E as an internal combustion engine. The driven-side rotating body B is disposed inside the drive-side rotating body A coaxially with a rotation axis X. The driven-side rotating body B rotates integrally with an intake camshaft 102 (an example of a camshaft) that opens and closes an intake valve 102B of the engine E (internal combustion engine). The phase adjustment mechanism C sets the relative rotation phase between the drive-side rotating body A and the driven-side rotating body B by the driving force of a phase control motor M (an example of an electric motor).

The engine E is configured as a four-cycle type in which a piston 104 is accommodated in each of a plurality of cylinders 103 formed in a cylinder block, and each piston 104 is connected to the crankshaft 101 by a connecting rod 105. A timing chain 106 (which may be a timing belt or the like) is wound across an output sprocket 101S of the crankshaft 101 of the engine E and a drive sprocket 111S of the drive-side rotating body A.

As a result, the entire valve opening and closing timing control device 100 rotates about the rotation axis X during the operation of the engine E. In addition, the phase adjustment mechanism C is operated by the driving force of the phase control motor M, and the driven-side rotating body B can be displaced with respect to the drive-side rotating body A in a direction same as the rotation direction or in a direction opposite to the rotation direction. The relative rotation phase between the drive-side rotating body A and the driven-side rotating body B is set by the displacement in the phase adjustment mechanism C, and the control of the opening and closing timing (opening and closing timing) of the intake valve 102B by a cam portion 102A of the intake camshaft 102 is realized.

An operation in which the driven-side rotating body B is relatively displaced in the direction same as the rotation direction of the drive-side rotating body A is referred to as an advance operation, and the intake compression ratio is increased by the advance operation. In addition, the operation in which the driven-side rotating body B is relatively displaced in the direction opposite to the direction of the drive-side rotating body A (operation in the direction opposite to the direction of the advance operation) is referred to as a retard operation, and the intake compression ratio is reduced by the retard operation.

As illustrated in Fig. 1, the drive-side rotating body A includes an outer case 111 having a drive sprocket 111S formed on the outer periphery and a front plate 112 that are fastened with a plurality of fastening bolts 113. The outer case 111 has a bottomed cylindrical shape having an opening at the bottom. The front plate 112 is provided away from the intake camshaft 102 with respect to an eccentric member 126 in the direction along the rotation axis X.

As illustrated in Figs. 1 and 2, an intermediate member 120 as the driven-side rotating body B and the phase adjustment mechanism C having a hypotrocoid-type gear reduction mechanism are accommodated in an internal space of the outer case 111. In addition, the phase adjustment mechanism C includes an Oldham's coupling Cx that reflects the phase change on the drive-side rotating body A and the driven-side rotating body B.

The intermediate member 120 constituting the driven-side rotating body B has a support wall portion 121 connected to the intake camshaft 102 in a posture orthogonal to the rotation axis X, and a cylindrical wall portion 122 having a cylindrical shape centered on the rotation axis X and protruding from an outer peripheral edge of the support wall portion 121 in a direction away from the intake camshaft 102, the intake camshaft and the cylindrical wall portion being integrally formed.

The intermediate member 120 is fitted in the outer case 111 so as to be relatively rotatable in a state where the outer face of the cylindrical wall portion 122 is in contact with the inner face of the outer case 111, and is fixed to the end of the intake camshaft 102 by a connecting bolt 123 inserted into the through hole at the center of the support wall portion 121. In such a fixed state, the end of the cylindrical wall portion 122 on the outer side (away from the intake camshaft 102) is configured to be located inside the front plate 112.

As illustrated in Figs. 1 and 2, a groove 122a is formed over the entire circumference on the outer periphery of the cylindrical wall portion 122. The groove 122a improves the retention of lubricating oil between the outer face of the cylindrical wall portion 122 and the inner face of the outer case 111. As a result, the frictional force between the cylindrical wall portion 122 and the outer case 111 is reduced, and the intermediate member 120 smoothly rotates with respect to the outer case 111.

As illustrated in Fig. 1, the phase control motor M is supported by the engine E by a support frame 107 so that an output shaft Ma of the phase control motor M is disposed coaxially with the rotation axis X. On the output shaft Ma of the phase control motor M, a pair of engagement pins 108 in a posture orthogonal to the rotation axis X is formed.

As illustrated in Figs. 1 to 3, the phase adjustment mechanism C includes the intermediate member 120, an output gear 125 formed on the inner peripheral face of the cylindrical wall portion 122 of the intermediate member 120, the eccentric member 126, an elastic member S, a first bearing 128, a second bearing 129, an input gear 130, a fixing ring 131, a ring-shaped spacer 132, and the Oldham's coupling Cx. A rolling bearing is used for the first bearing 128 and the second bearing 129, but a plain bearing can be used. In the present embodiment, the first bearing 128 is a ball bearing having an inner ring 128a in contact with the outer peripheral face of the eccentric member 126 and an outer ring 128b in contact with the inner peripheral face of the intermediate member 120. The second bearing 129 is a ball bearing having an inner ring 129a in contact with the outer peripheral face of the eccentric member 126 and an outer ring 129b in contact with the inner peripheral face of the input gear 130.

As illustrated in Fig. 1, in the inner circumference of the cylindrical wall portion 122 of the intermediate member 120, a support face 122S centered on the rotation axis X is formed on the inner side (position adjacent to the support wall portion 121) in the direction (hereinafter, it is described as an axial direction) along the rotation axis X, and an output gear 125 centered on the rotation axis X is integrally formed outside the support face 122S (away from the intake camshaft 102).

As illustrated in Figs. 1 to 3, the eccentric member 126 has a cylindrical shape. The eccentric member 126 has a circumferential support face 126S, which is the outer peripheral face centered on the rotation axis X on the inner side (close to the intake camshaft 102) in the axial direction. A flange portion 126Q protruding further outward in the radial direction from the circumferential support face 126S is formed further inside the circumferential support face 126S (close to the intake camshaft 102) in the axial direction. The eccentric member 126 has an eccentric support face 126E, which is the outer peripheral face centered on an eccentric axis Y that is eccentric in a posture parallel to the rotation axis X on the outer side (away from the intake camshaft 102). Therefore, the eccentric member 126 has the flange portion 126Q, the circumferential support face 126S, and the eccentric support face 126E in this order from the side close to the intake camshaft 102 along the axial direction. Since the direction along the eccentric axis Y is the same as the axial direction, hereinafter, the direction along the eccentric axis Y is also simply referred to as the axial direction.

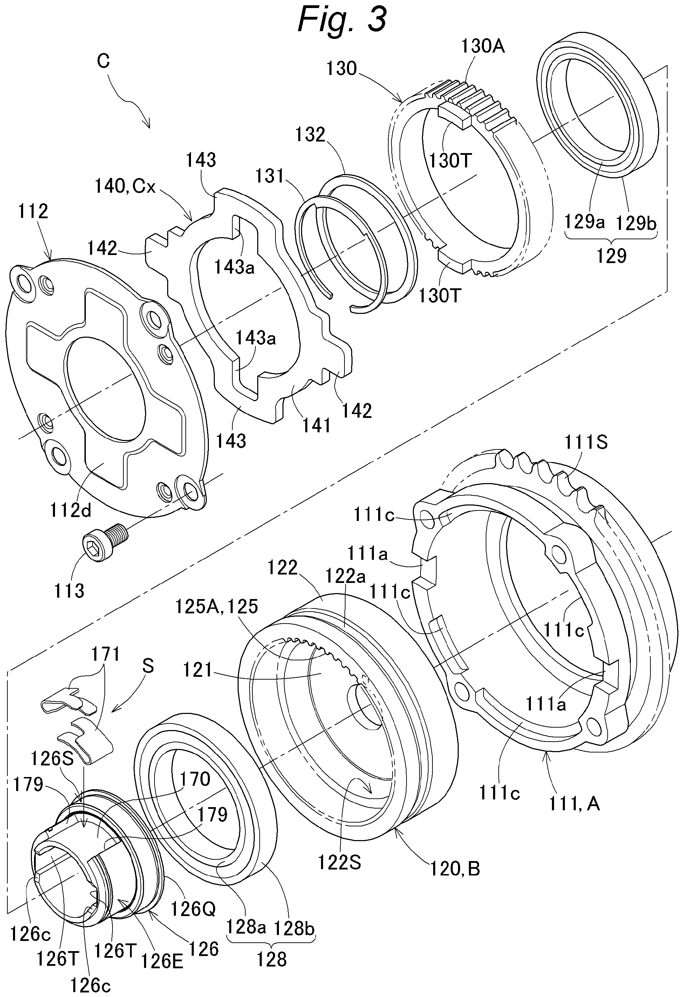

As illustrated in Figs. 1 and 3, the eccentric support face 126E has a first recess 170 that is recessed inward along the radial direction of the eccentric member 126. The bottom face of the first recess 170 has a pair of second recesses 179 and 179 recessed radially toward the axis of the eccentric member 126 at both ends of the eccentric member 126 in the circumferential direction. In the present embodiment, the first recesses 170 are symmetrical in the circumferential direction.

The second recesses 179 and 179 are formed at the respective ends of the first recess 170 in the circumferential direction of the eccentric member 126. The maximum depth of the bottom faces of the second recesses 179 and 179 in the radial direction of the eccentric member 126 is deeper than the depth of the bottom face of the first recess 170 near the circumferential center of the eccentric member 126. The face from the bottom face to the end portion of each of the second recesses 179 and 179 in the circumferential direction of the eccentric member 126 is formed in a shape along the curved shape of a spring member 171 described later.

The elastic member S is fitted into the first recess 170. The elastic member S includes a pair of spring members 171 and 171. In the present embodiment, the pair of spring members 171 and 171 has the same shape and the same size. The elastic member S applies a biasing force to the input gear 130 via the second bearing 129 so that part of an external tooth portion 130A of the input gear 130 meshes with part of an internal tooth portion 125A of the output gear 125. As a result, it is possible to prevent the expansion of the backlash between the input gear 130 and the output gear 125 and to prevent the abnormal noise. Thus, the durability of the input gear 130 and the output gear 125 can be improved.

As illustrated in Figs. 1 and 3, on the inner periphery of the eccentric member 126, a pair of engagement grooves 126T with which a pair of engagement pins 108 of the phase control motor M (see Fig. 1) can be engaged, respectively, are formed in a posture parallel to the rotation axis X.

As illustrated in Fig. 3, on the inner peripheral side of the opening end of the eccentric member 126 on the outer side (away from the intake camshaft 102), a tapered portion 126c (inclined portion) in which the diameter decreases toward the inner side (close to the intake camshaft 102) are formed on both side portions of the engagement groove 126T. When the pair of engagement pins 108 of the phase control motor M is engaged with the engagement grooves 126T of the eccentric member 126, the engagement pin 108 is guided to the engagement groove 126T by the tapered portion 126c, so that the engagement work between the phase control motor M and the eccentric member 126 is facilitated.

As illustrated in Fig. 1, the eccentric member 126 is rotatably supported by the intermediate member 120 about the rotation axis X by externally fitting the first bearing 128 to the circumferential support face 126S and fitting the first bearing 128 into the support face 122S of the cylindrical wall portion 122. As illustrated in Fig. 1, the input gear 130 is rotatably supported by the eccentric support face 126E of the eccentric member 126 via the second bearing 129 about the eccentric axis Y

In the phase adjustment mechanism C, the number of teeth of the external tooth portion 130A of the input gear 130 is set to be smaller than the number of teeth of the internal tooth portion 125A of the output gear 125 by one tooth. Part of the external tooth portion 130A of the input gear 130 meshes with part of the internal tooth portion 125A of the output gear 125.

As illustrated in Fig. 1, the fixing ring 131 is supported by the outer periphery of the eccentric member 126 in a fitted state to prevent the second bearing 129 from coming off via the spacer 132.

As illustrated in Fig. 1, a gap is formed between the eccentric member 126 and the support wall portion 121 of the intermediate member 120.

As illustrated in Figs. 1 to 3, the Oldham's coupling Cx includes a plate-shaped joint member 140 with a central annular portion 141, a pair of external engagement arms 142 protruding radially outward from the annular portion 141 along a first direction (left-right direction in Fig. 2), and an internal engagement arm 143 protruding radially outward from the annular portion 141 along a second direction (up-down direction in Fig. 2) orthogonal to the first direction that are integrally formed. Each of the pair of internal engagement arms 143 has an engagement recess 143a continuous with the opening of the annular portion 141.

At the opening edge portion of the outer case 111, one or more pocket portions 111c whose inner periphery is cut along the circumferential direction are formed at a portion other than a guide groove portion 111a. The pocket portion 111c collects the foreign matter that moves to the outer peripheral side by receiving the centrifugal force due to the rotation of the drive-side rotating body A. Figs. 2 and 3 illustrate a case where four pocket portions 111c are formed.

A pair of engagement protrusions 130T is integrally formed at an end face of the input gear 130, the face facing the front plate 112. The engagement width of the engagement protrusion 130T is set to be slightly narrower than the engagement width of the engagement recess 143a of the internal engagement arm 143.

With such a configuration, it is possible to cause the Oldham's coupling Cx to function by engaging the pair of external engagement arms 142 of the joint member 140 with the pair of guide groove portions 111a of the outer case 111 and engaging the pair of engagement protrusions 130T of the input gear 130 with the engagement recesses 143a of the pair of internal engagement arms 143 of the joint member 140.

The joint member 140 can be displaced in the first direction (the left-right direction in Fig. 2) in which the external engagement arm 142 extends with respect to the outer case 111, and the input gear 130 can be displaced in the second direction (the up-down direction in Fig. 2) along the forming direction of the engagement recess 143a of the internal engagement arm 143 with respect to the joint member 140.

As illustrated in Figs. 1 and 3, the spacer 132 makes the distance of the gap in which the second bearing 129 can move in the axial direction equal to or less than a predetermined set value. Since the spacer 132 is provided between the Oldham's coupling Cx (joint member 140) and the second bearing 129, the movement of the second bearing 129 in the axial direction is limited to a distance equal to or less than a predetermined set value. On a face, of the front plate 112, facing the input gear 130, a recess 112d recessed toward the outside (away from the intake camshaft 102) is formed. The recess 112d is provided to face the opening portion of the joint member 140 in the front plate 112, and the recess 112d is formed to be slightly wider than the opening portion of the joint member 140. Accordingly, contact between the engagement protrusion 130T of the input gear 130 and the front plate 112 can be prevented.

In the valve opening and closing timing control device 100 in the assembled state, as illustrated in Fig. 1, the support wall portion 121 of the intermediate member 120 is connected to the end of the intake camshaft 102 by the connecting bolt 123, and these components rotate integrally. The eccentric member 126 is supported by the intermediate member 120 using the first bearing 128 so as to be relatively rotatable about the rotation axis X. As illustrated in Fig. 1, the input gear 130 is supported by the eccentric support face 126E of the eccentric member 126 via the second bearing 129, and part of the external tooth portion 130A of the input gear 130 meshes with part of the internal tooth portion 125A of the output gear 125.

Further, as illustrated in Fig. 2, the external engagement arm 142 of the Oldham's coupling Cx is engaged with the pair of guide groove portions 111a of the outer case 111, and the engagement protrusion 130T of the input gear 130 is engaged with the engagement recess 143a of the internal engagement arm 143 of the Oldham's coupling Cx. As illustrated in Fig. 1, since the front plate 112 is disposed outside the joint member 140 of the Oldham's coupling Cx, the joint member 140 is movable in a direction orthogonal to the rotation axis X in a state of being in contact with the inner face of the front plate 112. With this arrangement, the Oldham's coupling Cx is disposed outside both the first bearing 128 and the second bearing 129 (away from the intake camshaft 102) and inside the front plate 112 (close to the intake camshaft 102).

As illustrated in Fig. 1, the pair of engagement pins 108 formed on the output shaft Ma of the phase control motor M is engaged with the engagement grooves 126T of the eccentric member 126.

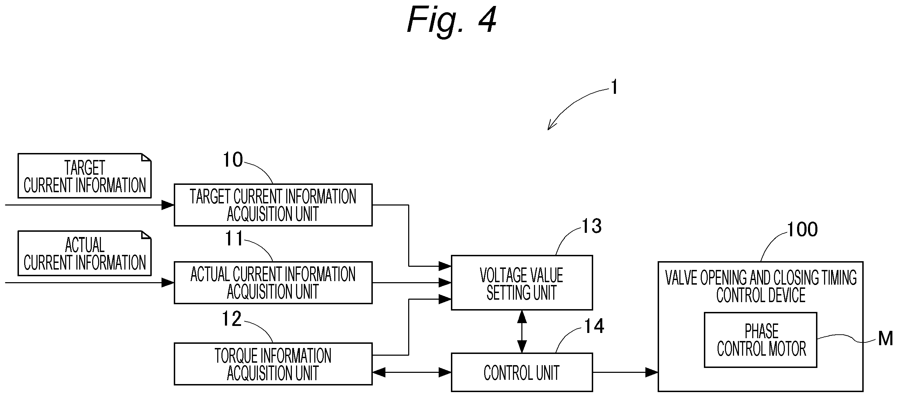

The phase control motor M is controlled by the motor control device 1 (see Fig. 4). The engine E includes sensors capable of detecting the rotation speeds (the number of rotations per unit time) of the crankshaft 101 and the intake camshaft 102 and the respective rotation phases, and is configured such that detection signals of these sensors are input to the control device.

The control device maintains the relative rotation phase by driving the phase control motor M at a speed equal to the rotation speed of the intake camshaft 102 when the engine E is in operation. On the other hand, the advance operation is performed by reducing the rotation speed of the phase control motor M to be lower than the rotational speed of the intake camshaft 102, and the retard operation is performed by increasing the rotational speed. As described above, the intake compression ratio is increased by the advance operation, and the intake compression ratio is reduced by the retard operation.

When the phase control motor M rotates at a speed equal to that of the outer case 111 (equal to that of the intake camshaft 102), the position of the meshing portion of the external tooth portion 130A of the input gear 130 with respect to the internal tooth portion 125A of the output gear 125 does not change, so that the relative rotation phase of the driven-side rotating body B with respect to the drive-side rotating body A is maintained.

On the other hand, by driving and rotating the output shaft Ma of the phase control motor M at a speed higher or lower than the rotation speed of the outer case 111, the eccentric axis Y revolves around the rotation axis X in the phase adjustment mechanism C. Due to this revolution, the position of the meshing portion of the external tooth portion 130A of the input gear 130 with respect to the internal tooth portion 125A of the output gear 125 is displaced along the inner circumference of the output gear 125, and a rotational force acts between the input gear 130 and the output gear 125. That is, a rotational force about the rotation axis X acts on the output gear 125, and a rotational force to rotate about the eccentric axis Y acts on the input gear 130.

As described above, since the engagement protrusion 130T of the input gear 130 is engaged with the engagement recess 143a of the internal engagement arm 143 of the joint member 140, the input gear does not rotate with respect to the outer case 111, and the rotational force acts on the output gear 125. By the action of the rotational force, the intermediate member 120 together with the output gear 125 rotates about the rotation axis X with respect to the outer case 111. As a result, the relative rotation phase between the drive-side rotating body A and the driven-side rotating body B are set, and the opening and closing timing by the intake camshaft 102 is set.

When the eccentric axis Y of the input gear 130 revolves about the rotation axis X, the joint member 140 of the Oldham's coupling Cx is displaced in the direction (first direction) in which the external engagement arm 142 extends with respect to the outer case 111 along with the displacement of the input gear 130, and the input gear 130 is displaced in the direction (second direction) in which the internal engagement arm 143 extends.

As described above, since the number of teeth of the external tooth portion 130A of the input gear 130 is set to be smaller than the number of teeth of the internal tooth portion 125A of the output gear 125 by one tooth, in a case where the eccentric axis Y of the input gear 130 revolves by one rotation around the rotation axis X, the output gear 125 rotates by one tooth, and large reduction is realized.

Fig. 4 is a block diagram schematically illustrating a configuration of the motor control device 1. The motor control device 1 includes a target current information acquisition unit 10, an actual current information acquisition unit 11, a torque information acquisition unit 12, a voltage value setting unit 13, and a control unit 14. Each functional unit is constructed by hardware, software, or both with a CPU as a core member in order to perform processing related to the control of the phase control motor M.

The target current information acquisition unit 10 acquires target current information indicating a target current value of the current for energizing the phase control motor M. For example, the host system of the motor control device 1 sets the target current value according to the required torque required for the phase control motor M. The required torque corresponds to the relative rotation phase between the drive-side rotating body A and the driven-side rotating body B required by the valve opening and closing timing control device 100. Therefore, when the phase control motor M is energized with the current of the target current value, the valve opening and closing timing control device 100 realizes the desired relative rotation phase. The target current information acquisition unit 10 acquires target current information indicating such a target current value.

The actual current information acquisition unit 11 acquires actual current information indicating an actual current value of the current actually flowing through the phase control motor M. The actual current value corresponds to an actual measurement value of the current flowing through the phase control motor M. Such an actual current value may be actually measured by a current sensor, or may be measured by applying a terminal voltage in the phase control motor M to a predetermined resistor and according to a potential difference between both ends of the resistor. Of course, measurement may be performed by other methods. The actual current information acquisition unit 11 acquires actual current information indicating such an actual current value.

The voltage value setting unit 13 sets the voltage value of the voltage to be applied to the phase control motor M. The voltage value setting unit 13 sets the voltage value to be low when the actual current value exceeds the target current value, and sets the voltage value to be high when the actual current value falls below the target current value. When the actual current value exceeds the target current value, the voltage value is set low, so that power consumption can be suppressed. When the actual current value falls below the target current value, the voltage value is set to be high, so that the rotation speed can be increased to improve the responsiveness.

The motor control device 1 according to the present embodiment can be configured to change the voltage value of the voltage to be applied to the phase control motor M based on torque information indicating the torque generated in an object to be driven driven by the valve opening and closing timing control device 100.

In this case, the torque generated in the object to be driven driven by the valve opening and closing timing control device 100 may be treated as the torque generated in the phase adjustment mechanism C driven by the valve opening and closing timing control device 100. The torque information indicating such a torque is acquired by the torque information acquisition unit 12. The torque generated in the phase adjustment mechanism C corresponds to the torque acting on the phase control motor M when the driven-side rotating body B is relatively rotated with respect to the drive-side rotating body A. Specifically, it corresponds to the cam torque generated when the intake camshaft 102 opens and closes the intake valve 102B. In the present embodiment, such a cam torque is not directly measured, but is estimated based on detection signals of sensors capable of detecting the rotation speeds (the number of rotations per unit time) of the crankshaft 101 and the intake camshaft 102 and the rotation phase of each of the crankshaft and the intake camshaft, and the estimated result is treated as the cam torque.

In a case where the torque information acquisition unit 12 is configured to acquire torque information indicating the torque generated in the phase adjustment mechanism C, it is preferable that the voltage value setting unit 13 is configured to increase the voltage value when the torque is a positive value and to decrease the voltage value when the torque is a negative value. As a result, the output torque of the phase control motor M when the torque is a positive value increases, and the output torque of the phase control motor M when the torque is a negative value decreases, so that the power consumption reduction effect can be further increased.

Further, according to the above configuration, since the speed of the relative rotation is high, the valve opening and closing timing control device 100 may be provided with a stopper in order to prevent damage and the like due to collision when the relative rotation phase is maximum. In this case, the voltage value setting unit 13 may decrease the voltage value of the voltage applied to the phase control motor M immediately before the relative rotation phase is maximum. That is, the voltage value setting unit 13 may decrease the voltage value of the voltage to be applied to the phase control motor M before colliding with the stopper based on the detection signal of the sensor capable of detecting the rotation phase described above. As a result, even when the speed of the relative rotation is increased, damage and the like due to collision can be prevented.

The control unit 14 applies the voltage of the voltage value set by the voltage value setting unit 13 described above to the phase control motor M of the valve opening and closing timing control device 100 to drive the motor. Although not illustrated, detection signals of sensors capable of detecting the rotation speeds (the number of rotations per unit time) of the crankshaft 101 and the intake camshaft 102 and each rotation phase is transmitted to the control unit 14. The control unit 14 transmits the detection signals and/or the calculation result based on the detection signals to the voltage value setting unit 13 and the torque information acquisition unit 12.

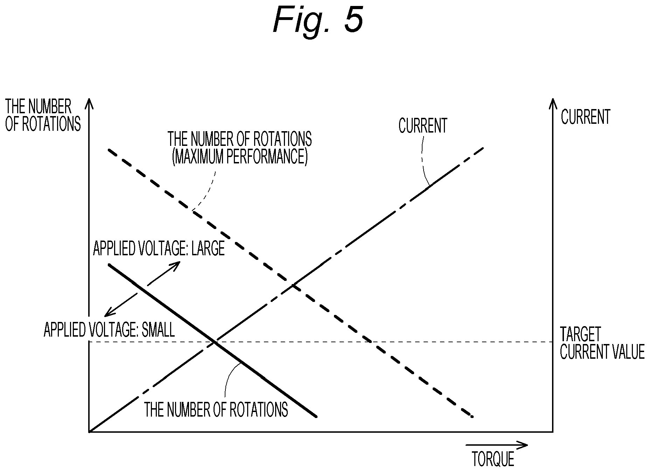

Fig. 5 is a characteristic diagram of the phase control motor M. In Fig. 5, the horizontal axis represents the torque output from the phase control motor M, the left vertical axis represents the number of rotations of the phase control motor M, and the right vertical axis represents the current flowing through the phase control motor M. For example, in the relationship between torque and current, the current value of the current flowing through the phase control motor M increases as the torque increases. In the relationship between the torque and the number of rotations, the number of rotations of the phase control motor M decreases as the torque increases. The relationship between the torque and the number of rotations approaches the characteristic of the maximum performance as the voltage value of the voltage applied to the phase control motor M increases, and is away from the characteristic of the maximum performance as the voltage value of the voltage applied to the phase control motor M decreases.

In such a characteristic diagram, in a case where the target current value indicated by the wavy line is set, the larger the required torque is, the larger the voltage value of the voltage applied to the phase control motor M is set to be. On the other hand, the smaller the required torque, the smaller the voltage value of the voltage applied to the phase control motor M is set to be.

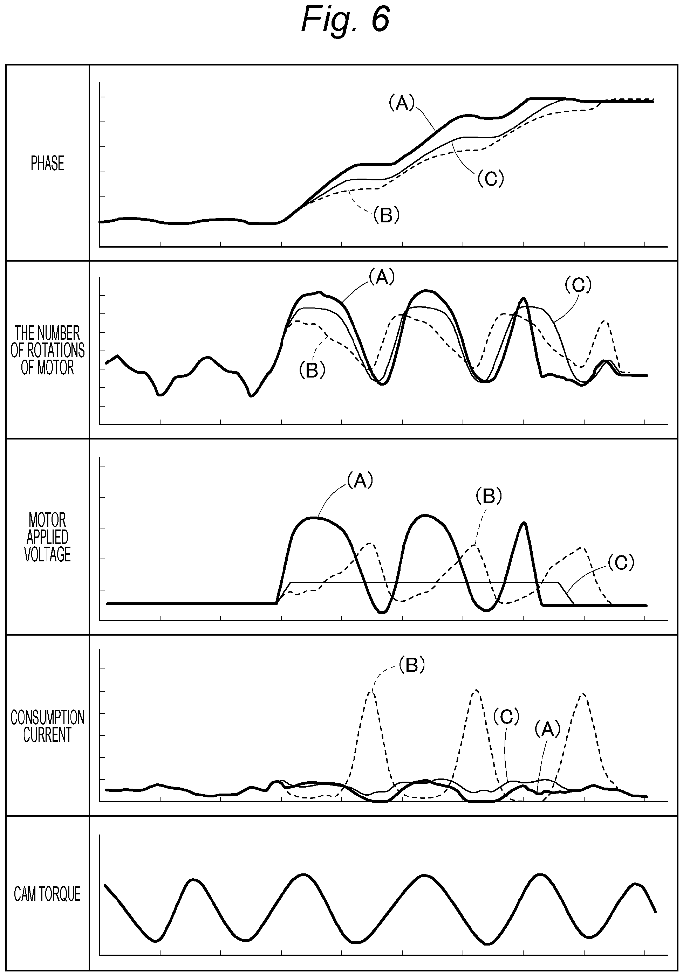

For example, in the constant conversion speed control as illustrated in (B) of Fig. 6 in which the applied voltage is lowered when the number of rotations of the motor is high and the applied voltage is increased when the number of rotations of the motor is low, the current consumption increases when the applied voltage is increased. In the constant voltage control as illustrated in (C) of Fig. 6 in which the applied voltage is constant regardless of the number of rotations of the motor, the consumption current tends to increase according to the number of rotations of the motor. However, with the above configuration, as illustrated in (A) of Fig. 6, the applied voltage is set to be high when the number of rotations of the motor is high, and the applied voltage is set to be low when the number of rotations of the motor is low, so that the current consumption can be suppressed to be lower than that in each of the constant conversion speed control and the constant voltage control.

### [Other Embodiments]

Next, other embodiments of the motor control device 1 will be described.

In the above embodiment, it is described that the voltage value setting unit 13 increases the voltage value of the voltage applied to the phase control motor M when the torque is a positive value, and decreases the voltage value of the voltage applied to the phase control motor M when the torque is a negative value. However, the voltage value setting unit 13 can be configured not to change the voltage value of the voltage applied to the phase control motor M based on the torque.

In the above embodiment, it is described that the electric device is the electric valve opening and closing timing control device 100. However, the electric device may be, for example, an electric pump or an electric fan. Furthermore, a device other than these devices may be used.

In the above embodiment, it is described that the voltage value setting unit 13 decreases the voltage value of the voltage applied to the phase control motor M immediately before the relative rotation phase between the drive-side rotating body A and the driven-side rotating body B is maximum. However, the voltage value setting unit 13 can be configured not to decrease the voltage value of the voltage applied to the phase control motor M even immediately before the relative rotation phase between the drive-side rotating body A and the driven-side rotating body B is maximum.

### [Outline of the above embodiments]

Hereinafter, an outline of the motor control device 1 described above will be described.
(1) A motor control device 1 is a motor control device 1 that controls a motor M that drives an electric device, the motor control device 1 includes a target current information acquisition unit 10 that acquires target current information indicating a target current value of a current for energizing the motor M, an actual current information acquisition unit 11 that acquires actual current information indicating an actual current value of a current actually flowing through the motor, and a voltage value setting unit 13 that sets a voltage value of a voltage to be applied to the motor M, wherein the voltage value setting unit 13 decreases the voltage value when the actual current value exceeds the target current value, and increases the voltage value when the actual current value falls below the target current value.
   According to the configuration, when the load of the motor M increases and the actual current exceeds the target current value, the voltage value of the applied voltage applied to the motor M can be decreased to lower the output of the motor M, and when the load of the motor M decreases and the actual current falls below the target current value, the voltage value of the applied voltage applied to the motor M can be increased to raise the output of the motor M. As a result, it is possible to reduce power consumption in a case where the load of the motor M increases, and it is possible to suppress a decrease in the number of rotations of the motor M in a case where the load of the motor M decreases.
(2) The motor control device 1 according to (1) preferably further includes further includes a torque information acquisition unit 12 unit that acquires torque information indicating torque generated in an object to be driven driven by the electric device, wherein the voltage value setting unit 13 preferably increases the voltage value when the torque is a positive value, and decreases the voltage value when the torque is a negative value.
   According to the configuration, it is possible to suppress the difference in the number of rotations of the motor M between the case where the torque has a positive value and the case where the torque has a negative value. Therefore, the electric device can be driven while the rotation speed of the motor M is kept constant.
(3) In the motor control device 1 according to (1) or (2), the electric device preferably is an electric valve opening and closing timing control device 100 including a drive-side rotating body A that rotates about a rotation axis X in synchronization with a crankshaft 101 of an engine (internal combustion engine) E, a driven-side rotating body E that is disposed coaxially with the rotation axis X and inside the drive-side rotating body A and rotates integrally with an intake camshaft (camshaft) 102 for valve opening/closing of the engine E, and a phase adjustment mechanism C that sets a relative rotation phase between the drive-side rotating body A and the driven-side rotating body B, and wherein the phase control motor (motor) M preferably drives the phase adjustment mechanism C.
   According to the configuration, in driving the electric valve opening and closing timing control device 100, it is possible to achieve both the reduction in power consumption and the suppression of the decrease in the displacement speed of the relative rotation phase between the drive-side rotating body A and the driven-side rotating body B.
(4) In the motor control device 1 according to (3), the voltage value setting unit 13 preferably decreases the voltage value immediately before the relative rotation phase is maximum.

In some cases, the valve opening and closing timing control device 100 is provided with a stopper in order to prevent damage and the like due to collision of the drive-side rotating body A and the driven-side rotating body B when the relative rotation phase is maximum. Therefore, with the above configuration, even in a case where the speed of the relative rotation is increased, damage and the like due to collision can be prevented.

The technology according to the present disclosure can be used in a motor control device that controls a motor that drives an electric device.

## Claims

1. A motor control device (1) that controls a motor M that drives an electric device, the motor control device (1) comprising:
a target current information acquisition unit (10) that acquires target current information indicating a target current value of a current for energizing the motor M;
an actual current information acquisition unit (11) that acquires actual current information indicating an actual current value of a current actually flowing through the motor M; and
a voltage value setting unit (13) that sets a voltage value of a voltage to be applied to the motor M, wherein the voltage value setting unit (13) decreases the voltage value when the actual current value exceeds the target current value, and increases the voltage value when the actual current value falls below the target current value.

2. The motor control device (1) according to claim 1, further comprising:
a torque information acquisition unit that acquires torque information indicating torque generated in an object to be driven by the electric device, wherein
the voltage value setting unit (13) increases the voltage value when the torque is a positive value, and decreases the voltage value when the torque is a negative value.

3. The motor control device (1) according to claim 1 or 2, wherein
the electric device is an electric valve opening and closing timing control device including a drive-side rotating body that rotates about a rotation axis in synchronization with a crankshaft of an internal combustion engine, a driven-side rotating body that is disposed coaxially with the rotation axis and inside the drive-side rotating body and rotates integrally with a camshaft for valve opening/closing of the internal combustion engine, and a phase adjustment mechanism that sets a relative rotation phase between the drive-side rotating body and the driven-side rotating body, and wherein
the motor M drives the phase adjustment mechanism.

4. The motor control device (1) according to claim 3, wherein the voltage value setting unit decreases the voltage value immediately before the relative rotation phase is maximum.
